# EUROPÄISCHE PATENTSCHRIFT

(11) **EP 1 617 534 B1**
(45) Veröffentlichungstag und Bekanntmachung des Hinweises auf die Patenterteilung: **21.04.2010**
(21) Anmeldenummer: 05014261.1
(22) Anmeldetag: 30.06.2005
(51) Int. Cl.: H02B 1/40

(54) **Verteiler der Elektroinstallation**
Electrical distributor
Répartiteur électrique

(30) Priorität: 14.07.2004 DE 102004033916
(43) Veröffentlichungstag der Anmeldung: 18.01.2006
(73) Patentinhaber: Hager Electro GmbH & Co. KG, 66440 Blieskastel (DE)
(72) Erfinder: Dissel, Klaus, 66131 Saarbrücken (DE)
(74) Vertreter: Bernhardt, Winfrid

(56) Entgegenhaltungen:
- EP-A- 0 859 439

## Beschreibung

Die Erfindung betrifft einen Verteiler der Elektroinstallation mit zwei an einer Gebäudewand in Abstand voneinander senkrecht zu befestigenden Trägerleisten für mindestens eine Hutschiene und/oder Montageplatte.

Zur Befestigung dieser Verteiler an der Gebäudewand werden sie zunächst in Anlage an der Wand gehalten und verschoben, bis die richtige Stelle und die genaue Ausrichtung in der Senkrechten und Waagerechten gefunden sind. Dann werden die Befestigungsstellen markiert, wobei der Verteiler mit einer Hand unbewegt weitergehalten werden muß. Sind die Verteiler bereits mit den vorgesehenen Geräten bestückt, so haben sie ein nicht geringes Gewicht und das Halten ist dementsprechend beschwerlich.
Zur Erleichterung des Anbringens werden gelegentlich Bohrschablonen beigefügt.

Der Erfindung liegt die Aufgabe zugrunde, das Anbringen der Verteiler an der Gebäudewand ohne Bohrschablonen zu erleichtern.

Gemäß der Erfindung wird dieser Zweck bei einem Verteiler der eingangs bezeichneten Art erfüllt durch ein für sich an der Wand zu befestigendes Hilfsteil, an dem zwei Kupplungsteile ausgebildet sind, auf die die Trägerleisten mit an ihnen ausgebildeten Gegen-Kupplungsteilen aufsetzbar sind.

Das Hilfsteils hat kein nennenswertes Gewicht. Es lässt sich daher bequem an der Wand in Stellung bringen und befestigen. Der schwere Verteiler kann dann mit beiden Händen gefasst, gehoben und an das Hilfsteil angesetzt werden. Der dann von dem Hilfsteil getragene Verteiler wird anschließend vollständig befestigt.

Der Arbeitsaufwand kann noch dadurch verringert werden, dass das, vorzugsweise nahe deren oberen Enden mit den Trägerleisten verbundene, Hilfsteil nur ein mittiges Schraubenloch für seine Befestigung erhält. Die genaue Ausrichtung in der Senkrechten und der Waagerechten kann dann im Rahmen der vollständigen Befestigung des Verteilers erfolgen.

Eine weitere Ausgestaltung des Hilfsteils zur Einsparung von Arbeit besteht darin, dass das Hilfsteil eine mit den Enden der Trägerleisten bündige Oberkante und an seinen beiden Enden flache, vorzugsweise spitze, Verlängerungen aufweist, mit denen es sich über die gesamte Breite des Verteilers erstreckt, wobei die Trägerleisten die Verlängerungen in flachen Ausnehmungen auf ihrer Rückseite aufnehmen.

Beim Anbringen des Hilfsteils ist dann die Erstreckung des Verteilers nach oben und nach den beiden Seiten unmittelbar sichtbar. Das erspart, Abstände zu messen und Differenzen zu berücksichtigen.

Weitere Maßnahmen, die zur vorteilhaften Ausgestaltung der Erfindung dienen können, sind in der nachfolgenden Beschreibung von Ausführungsbeispielen sowie in den Ansprüchen angeführt.

Die Zeichnungen geben zwei Ausführungsbeispiele der Erfindung wieder.
- Fig. 1: zeigt einen oberen Abschnitt eines Verteilers,
- Fig. 2: zeigt eine Einzelheit des Verteilers nach Fig. 1,
- Fig. 3: zeigt eine weitere Einzelheit des Verteilers nach Fig. 1,
- Fig. 4: zeigt ein Hilfsteil eines weiteren Verteilers,
- Fig. 5: zeigt einen Abschnitt des Hilfsteils und des weiteren Verteilers von der Rückseite.

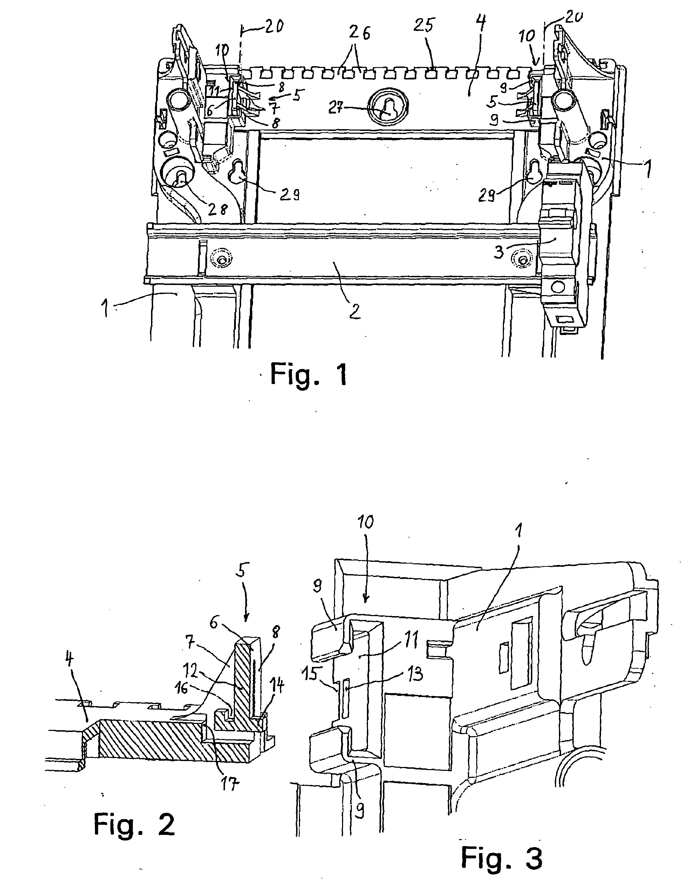

In Fig. 1 sind die oberen Enden von zwei Trägerleisten 1 für Hutschienen 2 zu erkennen, von denen in der Regel mehrere übereinander an den Trägerleisten angebracht sind. Weiter zu erkennen ist ein auf die Hutschiene 2 aufgesetzter Leitungsschutzschalter 3.

Die beiden Trägerleisten 1 sind an ihren oberen Enden verbunden durch ein Hilfsteil 4. Das Hilfsteil 4 hat die Form einer flachen Leiste, an deren Enden Konsolen 5 als Kupplungsteile angeformt sind. Die Konsolen 5 bestehen aus einer Platte 6 und zwei von dieser abgewinkelten Versteifungs- und Stützwänden 7.

Mit ihren seitlich über die Versteifungs- und Stützwände 7 hinausragenden Endabschnitten bildet die Platte 6 zwei Führungsleisten 8 für sie krallenartig umgreifende, auf sie aufschiebbare Hakenprofile 9 von an den Trägerleisten 1 ausgebildeten Gegen-Kupplungsteilen.

Die Gegen-Kupplungsteile sind insgesamt als C-Profile 10 gestaltet. Ihr ebener Grund 11 liegt an der Platte 6 an.
Durch einen U-förmigen Einschnitt ist in der Platte 6 eine federnde Zunge 12 gebildet, an der ein in eine Ausnehmung 13 des Grundes 11 einrastendes Riegelelement 14 angeformt ist.
Die Zunge 12 ist in Fig. 2 zu erkennen. Fig. 2 zeigt das in Fig. 1 rechte Ende des Hilfsteils 4, unmittelbar neben der oberen Versteifungs- und Stützwand 7 parallel zu dieser ausgeschnitten. Fig. 3 zeigt das zugehörige C-Profil 10 an der Trägerleiste 1 mit der Ausnehmung 13 und einem schrägen Einschnitt 15 an seiner Unterkante, an dem sich das Riegelelement 14 beim Aufsetzen des C-Profils 10 auf die Führungsleisten 8 unter Verbiegung der Zunge 12 zurückdrückt, bis es in der Ausnehmung 13 einrastet.

Auf der anderen Seite der Zunge 12 ist eine Tasche 16 angeformt, derart, dass sich unter Eingriff der Schraubendreherspitze in die Tasche 16 die Zunge 12 mittels eines Schraubendrehers zur Entriegelung zurückbiegen lässt. Ein Anschlag 17 für die Tasche 16 begrenzt dabei die Verbiegung der Zunge 12.

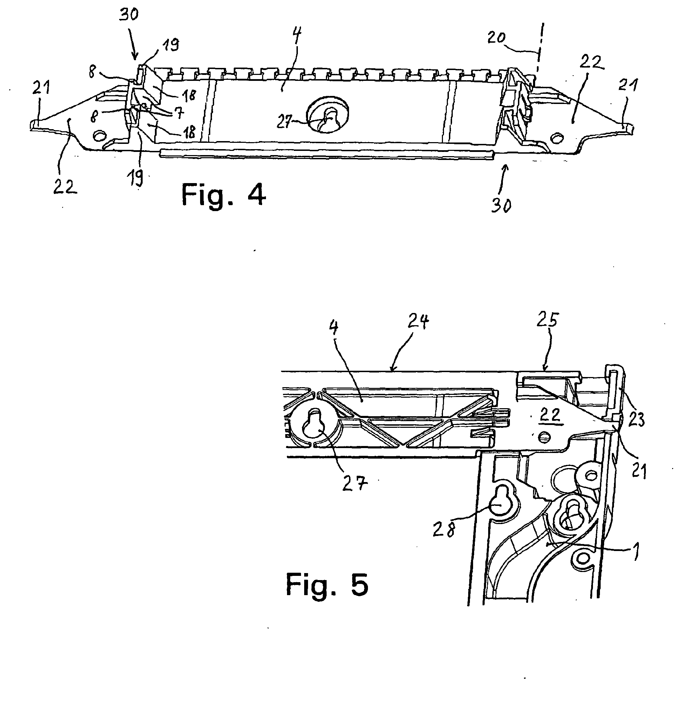

Fig. 4 enthält die Abwandlung, dass die Versteifungs- und Stützwände 7 durch von ihnen abgewinkelte weitere Versteifungs- und Stützwände 18 und 19 zu räumlichen Stützen U-förmigen Querschnitts ergänzt sind, deren am U-Grund angeordnete Versteifungs- und Stützwand 18 vorzugsweise geneigt ist.
Insbesondere durch die Versteifungs- und Stützwände 18 kommt eine größere Tragfähigkeit der, hier mit 30 bezeichneten, Konsolen zustande.

Ferner ist in Fig. 4 das Hilfsteil 4 über seine für Fig. 1 geltenden Endlinien 20 hinaus verlängert. Die, mit einer Spitze 21 auslaufenden, flachen Verlängerungen sind mit 22 bezeichnet.

Wie in Fig. 5 dargestellt, finden die Verlängerungen 22 Platz in einer flachen Ausnehmung auf der Unterseite der Trägerleisten 1. Dabei ragt die Spitze 21 seitlich so weit heraus wie die vorspringende Ecke 23 der Trägerleiste 1. Die Oberkante 24 des Hilfsteils 4 fluchtet mit der Endkante 25 der Trägerleiste 1.
Parallel zu der Oberkante 24 ist an der Oberseite des Hilfsteils 4 eine Reihe von Kabelabfängern 26 geformt.

Das Hilfsteil 4 ist mit einem mittigen Schraubenloch 27 versehen.

Die Bedeutung und die Funktion der beschriebenen Teile sind in der Einleitung bereits erläutert.
Für die in den Trägerleisten 1 oben dargestellten Schraubenlöcher 28 und 29 besteht normalerweise keine Verwendung. Eine zusätzliche Benutzung ist jedoch möglich.

Die Schraubenlöcher 28 und 29 sind am unteren Ende der, symmetrisch gestalteten, Trägerleisten 1 in gleicher Weise vorhanden. Die dortigen Schraubenlöcher 28 dienen zur vollständigen Befestigung des Verteilers zusammen mit dem Schraubenloch 27 in dem Hilfsteil 4; bei an dem Hilfsteil 4 hängendem Verteiler werden die zu bohrenden Löcher angezeichnet und der Verteiler wird mit oder ohne Hilfsteil noch einmal abgenommen, um die Löcher zu bohren und die Dübel und Schrauben zu setzen. Die Schraubenlöcher 29 sind mit ausbrechbaren Platten verschlossen und werden nur in besonderen Fällen statt der Schraubenlöcher 28 benutzt.

Die Kupplungs-Anordnung könnte auch umgekehrt sein, d.h., dass an dem Hilfsteil als die Kupplungsteile Umfassungsteile, vorzugsweise C-Profile, angeformt sind, und an den Trägerleisten als die Gegen-Kupplungsteile zwei voneinander abgewandte, vorzugsweise die Ränder einer durchgehenden Platte darstellende, Führungsleisten ausgebildet sind, die in die Umfassungsteile einschiebbar sind und von ihnen mit Hakenprofilen krallenartig umgriffen werden. Auch hier sind vorzugsweise Versteifungs- und Stützwände für die Kupplungsteile gebildet.

## Patentansprüche

1. Verteiler der Elektroinstallation mit zwei an einer Gebäudewand in Abstand voneinander senkrecht zu befestigenden Trägerleisten (1) für mindestens eine Hutschiene (2) und/oder Montageplatte,
**gekennzeichnet durch** ein für sich an der Wand zu befestigendes Hilfsteil (4), an dem zwei Kupplungsteile (5) ausgebildet sind, auf die die Trägerleisten (1) mit an ihnen ausgebildeten Gegen-Kupplungsteilen (10) aufsetzbar sind.

2. Verteiler nach Anspruch 1,
**dadurch gekennzeichnet,**
**dass** das Hilfsteil (1) die Form einer flachen Leiste hat, an der als die Kupplungsteile Konsolen (5) angeformt sind, die zwei voneinander abgewandte, vorzugsweise die Ränder einer durchgehenden Platte (6) darstellende, Führungsleisten (8) für sie krallenartig umgreifende, auf sie aufschiebbare Hakenprofile (9) der Gegen-Kupplungsteile (10) aufweisen.

3. Verteiler nach Anspruch 2,
**dadurch gekennzeichnet,**
**dass** die Gegen-Kupplungsteile insgesamt als C-Profile (10) gestaltet sind mit einem an der genannten Platte (6) anliegenden ebenen Grund (11).

4. Verteiler nach Anspruch 2 oder 3,
**dadurch gekennzeichnet,**
**dass** die Konsolen (5) zwischen den Endkanten der Hakenprofile (9) von den Führungsleisten (8) abgewinkelte Versteifungs- und Stützwände (7) aufweisen.

5. Verteiler nach Anspruch 4,
**dadurch gekennzeichnet,**
**dass** die Versteifungs- und Stützwände (7) durch von ihnen abgewinkelte weitere Versteifungs- und Stützwände (18;19) zu räumlichen Stützen U-förmigen Querschnitts ergänzt sind, deren am U-Grund angeordnete Versteifungs- und Stützwand (18) vorzugsweise geneigt ist.

6. Verteiler nach einem der Ansprüche 3 bis 5,
**dadurch gekennzeichnet,**
**dass** durch einen U-förmigen Einschnitt in der Platte (6) oder dem Grund eine federnde Zunge (12) gebildet ist, an der ein in eine Ausnehmung (13) des Grundes (11) bzw. der Platte einrastendes Riegelelement (14) angeformt ist, wobei vorzugsweise auf der anderen Seite der Zunge (12) eine Tasche (16) angeformt ist derart, dass sich unter Eingriff der Schraubendreherspitze in die Tasche (16) die Zunge (12) mittels eines Schraubendrehers zur Entriegelung zurückbiegen lässt.

7. Verteiler nach einem der Ansprüche 1 bis 6,
**dadurch gekennzeichnet,**
**dass** das, vorzugsweise nahe deren oberen Enden mit den Trägerleisten (1) verbundene, Hilfsteil (4) nur ein mittiges Schraubenloch (27) für seine Befestigung an der Wand aufweist.

8. Verteiler nach einem der Ansprüche 1 bis 7,
**dadurch gekennzeichnet,**
**dass** das Hilfsteil (4) eine mit den Enden der Trägerleisten bündige Oberkante (24) und an seinen beiden Enden flache, vorzugsweise spitze, Verlängerungen (22) aufweist, mit den es sich über die gesamte Breite des Verteilers erstreckt, und die Trägerleisten (1) die Verlängerungen (22) in flachen Ausnehmungen auf ihrer Unterseite aufnehmen.

9. Verteiler nach Anspruch 1,
**dadurch gekennzeichnet,**
**dass** das Hilfsteil die Form einer flachen Leiste hat, an der als die Kupplungsteile Umfassungsteile, vorzugsweise C-Profile, angeformt sind, und an den Trägerleisten als die Gegen-Kupplungsteile zwei voneinander abgewandte, vorzugsweise die Ränder einer durchgehenden Platte darstellende, Führungsleisten aus- - gebildet sind, die in die Umfassungsteile einschiebbar sind und von ihnen mit Hakenprofilen krallenartig umgriffen werden.

10. Verteiler nach Anspruch 9,
**dadurch gekennzeichnet,**
**dass** die Umfassungsteile mit Versteifungs- und Stützwänden versehen sind.

## Claims

1. Electrical installation distribution block having two supporting strips (1), which can be attached to a building wall at a distance vertically one above the other, for at least one top-hat section rail (2) and/or mounting plate,
**characterized by** an auxiliary part (4) which can be attached in its own right to the wall and on which two coupling parts (5) are formed, onto which the supporting strips (1) can be placed with mating coupling parts (10) formed on them.

2. Distribution block according to Claim 1, **characterized in that** the auxiliary part (1) is in the form of a flat strip on which brackets (5) are integrally formed as the coupling parts, which brackets (5) have two guide strips (8), which face away from one another and preferably represents the edges of a continuous plate (6), for hook profiles (9), which clasp them like claws and can be pushed onto them, of the mating coupling parts (10).

3. Distribution block according to Claim 2, **characterized in that** the mating coupling parts are in the form of C-profiles (10) overall, with a flat base (11) resting on the said plate (6).

4. Distribution block according to Claim 2 or 3, **characterized in that** the brackets (5) have stiffening and supporting walls (7), which are angled away from the guide strips (8), between the end edges of the hook profiles (9).

5. Distribution block according to Claim 4, **characterized in that** the stiffening and supporting walls (7) additionaly have further stiffening and supporting walls (18; 19), which are angled away from them, for three-dimensional support of a U-shaped cross section, whose stiffening and supporting wall (18) which is arranged at the base of the U is preferably inclined.

6. Distribution block according to one of Claims 3 to 5, **characterized in that** a spring tongue (12) is formed by a U-shaped incision in the plate (6) or the base, on which tongue (12) a bolt element (14) is integrally formed which latches in a recess (13) in the base (11) or the plate, with a pocket (16) preferably being integrally formed on the other side of the tongue (12) such that the tongue (12) can be bent back by means of a screwdriver for unlocking, by inserting the tip of the screwdriver into the pocket (16).

7. Distribution block according to one of Claims 1 to 6, **characterized in that** the auxiliary part (4), which is preferably connected to the supporting strips (1) close to their upper ends, has only a central screw hole (27) for attaching it to the wall.

8. Distribution block according to one of Claims 1 to 7, **characterized in that** the auxiliary part (4) has an upper edge (24) which is flush with the ends of the supporting strips and has flat, preferably pointed, extensions (22) at its two ends, by means of which it extends over the entire width of the distribution block, and the supporting strips (1) hold the extensions (22) in flat recesses on their lower face.

9. Distribution block according to Claim 1, **characterized in that** the auxiliary part is in the form of a flat strip on which clasping parts, preferably C-profiles, are integrally formed as the coupling parts, and two guide strips, which face away from one another and preferably represent the edges of a continuous plate, are formed as the mating coupling parts on the supporting strips, can be pushed into the clasping parts and are clasped by them with hook profiles, like claws.

10. Distribution block according to Claim 9, **characterized in that** the clasping parts are provided with stiffening and supporting walls.

## Revendications

1. Répartiteur pour installation électrique, comprenant deux barrettes porteuses (1) destinées à être fixées verticalement sur un mur de bâtiments à distance l'une de l'autre, pour au moins un rail-chapeau (2) et/ou une plaque de montage,
**caractérisé par** une pièce auxiliaire (4) destinée à être montée par elle-même sur le mur et sur laquelle sont réalisées deux parties d'accouplement (5) sur lesquelles les barrettes porteuses (1) peuvent être posées avec des parties d'accouplement antagonistes (10) réalisées sur elles-mêmes.

2. Répartiteur selon la revendication 1,
**caractérisé en ce que** la pièce auxiliaire (1) a la forme d'une barrette plane sur laquelle sont conformées des consoles (5) à titre de parties d'accouplement, qui comprennent deux barrettes de guidage (8) détournées l'une de l'autre et représentant de préférence les bordures d'une plaque continue (6) pour des profilés en crochet (9), des parties d'accouplement antagonistes (10), qui les entourent à la manière de griffes et qui sont susceptibles d'être enfilés sur celles-ci.

3. Répartiteur selon la revendication 2,
**caractérisé en ce que** les parties d'accouplement antagonistes sont conçus dans leur ensemble comme des profilés en C (10), avec un fond plat (11) appliqué sur la plaque précitée (6).

4. Répartiteur selon la revendication 2 ou 3,
**caractérisé en ce que** les consoles (5) comprennent, entre les arêtes terminales des profilés en crochet (9), des parois de rigidification et de soutien (7) coudées à partir des barrettes de guidage (8).

5. Répartiteur selon la revendication 4,
**caractérisé en ce que** les parois de rigidification et de soutien (7) sont complétées par d'autres parois de rigidification et de soutien (18 ; 19) coudées à partir d'elles-mêmes pour former un soutien dans l'espace à section en forme de U, et dont la paroi de rigidification et de soutien (18) agencée sur le fond du U est de préférence inclinée.

6. Répartiteur selon l'une des revendications 3 à 5,
**caractérisé en ce qu'**une languette à effet ressort (12) est formée par une entaille en forme de U dans la plaque (6) ou dans le fond, languette sur laquelle est conformé un élément de verrouillage (14) qui s'enclenche dans un évidement (13) du fond (11) ou de la plaque, et une poche (16) est conformée de préférence sur l'autre côté de la languette (12), de telle manière que la languette peut être fléchie en retour pour le déverrouillage au moyen d'un tournevis en engageant la pointe du tournevis dans la poche (16).

7. Répartiteur selon l'une des revendications 1 à 6,
**caractérisé en ce que** la pièce auxiliaire (4) reliée avec les barrettes porteuses (1), de préférence à proximité de leurs extrémités supérieures, ne présente qu'un trou à vis central (27) pour sa fixation sur le mur.

8. Répartiteur selon l'une des revendications 1 à 7,
**caractérisé en ce que** la pièce auxiliaire (4) comporte une arête supérieure (24) en affleurement avec les extrémités des barrettes porteuses, et des prolongements (22) plats, de préférence pointus, à ses deux extrémités, au moyen desquels elle s'étend sur la totalité de la largeur du répartiteur, et les barrettes porteuses (1) reçoivent les prolongements (22) dans des évidements plats sur leur face inférieure.

9. Répartiteur selon la revendication 1,
**caractérisé en ce que** la pièce auxiliaire a la forme d'une barrette plane sur laquelle sont conformées des parties enveloppantes, de préférence des profilés en C, à titre de parties d'accouplement, et deux barrettes de guidage sont réalisées sur des barrettes porteuses à titre de parties d'accouplement antagonistes, détournées l'une de l'autre et représentant de préférence les bordures d'une plaque continue, lesdites barrettes de guidage pouvant être enfilées dans les parties enveloppantes et être entourées par celle-ci à la manière de griffes avec des profilés en crochet.

10. Répartiteur selon la revendication 9,
**caractérisé en ce que** les parties enveloppantes sont pourvues de parois de rigidification et de soutien.
